(19) Europäisches Patentamt
European Patent Office
Office européen des brevets

(11) **EP 4 080 197 B1**

(12) **EUROPÄISCHE PATENTSCHRIFT**

(45) Veröffentlichungstag und Bekanntmachung des Hinweises auf die Patenterteilung:
**24.05.2023   Patentblatt 2023/21**

(21) Anmeldenummer: **21169633.1**

(22) Anmeldetag: **21.04.2021**

(51) Internationale Patentklassifikation (IPC):
**G01N 21/45** (2006.01)

(52) Gemeinsame Patentklassifikation (CPC):
**G01N 21/45; G01N 21/171; G01N 21/1717;**
G01N 2021/1712; G01N 2021/1725;
G01N 2021/451

(54) **VERFAHREN UND SENSOR ZUM PHOTOTHERMISCHEN BESTIMMEN EINER ABSORPTION EINER ELEKTROMAGNETISCHEN ANREGUNGSSTRAHLUNG IN EINER PROBE**

METHOD AND SENSOR FOR THE PHOTOTHERMAL DETERMINATION OF ABSORPTION OF ELECTROMAGNETIC EXCITATION RADIATION IN A SAMPLE

PROCÉDÉ ET CAPTEUR DE DÉTERMINATION PHOTOTHERMIQUE D'UNE ABSORPTION D'UN RAYONNEMENT D'EXCITATION ÉLECTROMAGNÉTIQUE DANS UN ÉCHANTILLON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.10.2022   Patentblatt 2022/43**

(73) Patentinhaber: **Fraunhofer-Gesellschaft zur Förderung
der angewandten Forschung e.V.
80686 München (DE)**

(72) Erfinder:
• **Kießling, Jens, Dr.
79110 Freiburg (DE)**
• **Kühnemann, Frank, Dr.
79110 Freiburg (DE)**
• **Trendle, Tobias
79110 Freiburg (DE)**
• **Wolf, Sebastian, Dr.
79110 Freiburg (DE)**

(74) Vertreter: **WSL Patentanwälte Partnerschaft mbB
Kaiser-Friedrich-Ring 98
65185 Wiesbaden (DE)**

(56) Entgegenhaltungen:
EP-A2- 1 691 189          DE-A1- 19 507 909
DE-A1-102018 115 420

**Beschreibung**

Die vorliegende Erfindung betrifft ein Verfahren zum photothermischen Bestimmen einer Absorption einer elektromagnetischen Anregungsstrahlung in einer Probe mit den Schritten:

A) Erzeugen der Anregungsstrahlung mit einer über einen Anregungsstrahlquerschnitt der Anregungsstrahlung variierenden Anregungsintensität und mit einer Anregungsfrequenz, wobei die Anregungsfrequenz gleich einer Absorptionsfrequenz der Probe ist,
B) periodisches Modulieren der Anregungsstrahlung mit einer Modulationsfrequenz,
C) Beleuchten der Probe mit der periodisch modulierten Anregungsstrahlung,
D) Erzeugen einer elektromagnetischen Abfragestrahlung mit einem Abfragestrahlquerschnitt und einer Abfragefrequenz, wobei die Abfragefrequenz von der Anregungsfrequenz verschieden ist,
E) Beleuchten der Probe mit der Abfragestrahlung,

so dass sich ein Anregungsstrahlengang der Anregungsstrahlung und ein Abfragestrahlengang der Abfragestrahlung unter einem von null Grad verschiedenen Winkel in einem Schnittpunkt in der Probe schneiden und
so dass sich der Abfragestrahlquerschnitt über Bereiche des Anregungsstrahlquerschnitts voneinander verschiedener Anregungsintensität verteilt,

F) Erfassen einer ersten Musterintensität eines Interferenzmusters der Abfragestrahlung in dem Abfragestrahlengang hinter der Probe an einem ersten Ort in einer Detektorebene als erstes Messsignal,
G) Bilden eines Detektorsignals aus dem ersten Messsignal und
H) Filtern des ersten Messsignals oder des Detektorsignals nach der Modulationsfrequenz, so dass ein Ausgabesignal erzeugt wird, wobei das Ausgabesignal mit der Modulationsfrequenz modulierte Signalanteile des ersten Messsignals enthält.

Ein Verfahren mit den Schritten A)-H) ist aus dem Dokument DE 10 2018 115420 A1 bekannt.

Die vorliegende Erfindung betrifft darüber hinaus einen photothermischen Absorptionssensor zum Bestimmen einer Absorption einer elektromagnetischen Anregungsstrahlung in einer Probe mit einer Strahlungsquelle, die derart ausgestaltet ist, dass die Strahlungsquelle in einem Betrieb des Absorptionssensors die Anregungsstrahlung mit einer über einen Anregungsstrahlquerschnitt der Anregungsstrahlung variierenden Anregungsintensität und mit einer Anregungsfrequenz erzeugt und abstrahlt, einer Modulationseinrichtung, die derart ausgestaltet und angeordnet ist, dass die Modulationseinrichtung in dem Betrieb des Absorptionssensors die Anregungsstrahlung mit einer Modulationsfrequenz periodisch moduliert, einer Strahlungsquelle, die derart ausgestaltet ist, dass die Strahlungsquelle in dem Betrieb des Absorptionssensors eine elektromagnetische Abfragestrahlung mit einem Abfragestrahlquerschnitt und einer Abfragefrequenz erzeugt und abstrahlt, wobei die Abfragefrequenz von der Anregungsfrequenz verschieden ist, einem Detektor, der derart ausgestaltet angeordnet ist, dass der Detektor in dem Betrieb des Absorptionssensors eine erste Musterintensität eines Interferenzmusters der Abfragestrahlung in einem Abfragestrahlengang der Abfragestrahlung hinter der Probe erfasst und ein erstes Messsignal erzeugt, und einer Verarbeitungseinrichtung, die derart mit dem Detektor verbunden ist, dass die Verarbeitungseinrichtung in dem Betrieb des Absorptionssensors das erste Messsignal von dem Detektor erhält, wobei ein Anregungsstrahlengang der von der Strahlungsquelle abgestrahlten Anregungsstrahlung und der Abfragestrahlengang derart ausgestaltet und angeordnet sind, dass in dem Betrieb des Absorptionssensors die Probe mit der periodisch modulierten Anregungsstrahlung und mit der Abfragestrahlung derart beleuchtet wird, dass sich der Anregungsstrahlengang und der Abfragestrahlengang unter einem von null Grad verschiedenen Winkel in einem Schnittpunkt in der Probe schneiden und dass sich der Abfragestrahlquerschnitt über Bereiche des Anregungsstrahlquerschnitts mit voneinander verschiedenen Intensitäten verteilt, wobei die Verarbeitungseinrichtung ein Filter umfasst, wobei das Filter derart ausgestaltet ist, dass in dem Betrieb des Absorptionssensors das Filter das erste Messsignal oder ein aus dem ersten Messsignal gebildetes Detektorsignal nach der Modulationsfrequenz filtert, so dass ein Ausgabesignal erzeugt wird, wobei das Ausgabesignal mit der Modulationsfrequenz modulierte Signalanteile des ersten Messsignals enthält.

Für den Nachweis eines Stoffes müssen die dazu verwendeten Verfahren und Sensoren eine hohe Sensitivität aufweisen. Insbesondere wenn es sich beim dem nachzuweisenden Stoff um ein sogenanntes Spurengas handelt, das bezogen auf das Gasvolumen einen Volumenanteil im ppb- bis ppt-Bereich ($10^{-9}$ bis $10^{-12}$) besitzt, sind besonders sensitive Sensoren und Verfahren erforderlich.

Der Nachweis von kleinen Mengen eines Stoffes, insbesondere eines Spurengases, und die Bestimmung der Stoffkonzentration finden in vielen Bereichen Anwendung, beispielsweise in der Analytik, der Medizintechnik und auch bei dem Aufspüren von Leckagen und Kontaminationen, z.B. bei der Überwachung sensibler Gasleitungssysteme.

Aus dem Stand der Technik sind Sensoren bekannt, bei denen zum Nachweis eines Spurengases bzw. zur Bestimmung der Stoffkonzentration von Spurengasen sogenannte Langwegzellen zum Einsatz kommen. Dabei wird eine Laserstrahlung, deren Wellenlängen eine Absorptionswellenlänge des zu bestimmenden Spurengases umfasst, über eine möglichst lange Interaktionslänge in einem als Langwegzelle bezeichneten Probenraum durch ein Gasvolumen transmittiert. Auf Basis des durch die Absorption bedingten Intensitätsverlusts der Laserstrahlung kann auf die Konzentration des Spurengases in dem Probenraum zurückgeschlossen werden.

Alternativ können auch photothermische Verfahren wie beispielsweise die photothermische Common-Path Interferometrie (PCI) verwendet werden, um einen Stoff, beispielsweise eine Spurengas, in einer Probe mit großer Empfindlichkeit nachzuweisen oder dessen Konzentration zu bestimmen. Die PCI wird auch als "thermal lens spectroscopy" bezeichnet. Diese Form der Absorptionssensorik zeichnet sich durch einen sich über viele Größenordnungen erstreckenden linearen Bereich sowie durch niedrige erzielbare Nachweisgrenzen für die Absorption und somit die noch erfassbaren Stoffkonzentrationen aus.

Gegenüber den aus dem Stand der Technik bekannten photothermischen Verfahren ist es Aufgabe der vorliegenden Erfindung, ein Verfahren sowie einen Absorptionssensor bereitzustellen, welche eine verringerte Empfindlichkeitsgrenze für die Absorption der Anregungsstrahlung durch die Probe aufweist.

Zudem ist es eine Aufgabe der vorliegenden Erfindung ein Verfahren sowie einen Absorptionssensor bereitzustellen, die einen gegenüber dem Stand der Technik verringerten Bauraum aufweisen.

Zumindest eine der zuvor genannten Aufgaben wird durch ein Verfahren zum photothermischen Bestimmen einer Absorption einer elektromagnetischen Anregungsstrahlung in einer Probe gemäß dem unabhängigen Anspruch 1 gelöst.

Erfindungsgemäß wird das eingangs genannte Verfahren dahingehend ergänzt, dass es weiterhin den Schritt umfasst

I) Erfassen einer zweiten Musterintensität des Interferenzmusters der Abfragestrahlung an einem zweiten Ort in der Detektorebene als zweites Messsignal, so dass die Phase einer durch das periodische Modulieren der Anregungsstrahlung bewirkten periodischen Modulation der zweiten Musterintensität der Abfragestrahlung an dem ersten Ort um einen von null Grad oder 360 Grad verschiedenen Wert gegenüber der Phase der durch das periodische Modulieren der Anregungsstrahlung bewirkten periodischen Modulation der zweiten Musterintensität der Abfragestrahlung an dem zweiten Ort verschoben ist und der Schritt G) den Schritt umfasst

a) Bilden einer Differenz zwischen dem ersten Messsignal und dem zweiten Messsignal, so dass das Detektorsignal ein differentielles Signal ist, wobei Schritt H) ein Filtern zumindest des ersten und des zweiten Messsignals oder des Detektorsignals umfasst, so dass das Ausgabesignal mit der Modulationsfrequenz modulierte Signalanteile des ersten Messsignals und des zweiten Messsignals enthält.

Die Grundidee der PCI beruht auf einem periodisch modulierten Erzeugen einer thermischen Linse in der Probe selbst. Dazu wird die Anregungsstrahlung mit einer sich über einen Anregungsstrahlquerschnitt der Anregungsstrahlung variierenden Anregungsintensität in die Probe eingestrahlt, wobei die Anregungsfrequenz der Anregungsstrahlung gleich einer Absorptionsfrequenz der Probe ist. Durch die Absorption der Anregungsstrahlung in der Probe wird die Probe im Anregungsstrahlquerschnitt erwärmt. Aufgrund der über den Anregungsstrahlquerschnitt hinweg variierenden Anregungsintensität variiert auch der Leistungseintrag in die Probe und damit die Erwärmung der Probe über den Anregungsstrahlquerschnitt hinweg. Es wird eine thermische Linse ausgebildet. Gleichzeitig wird eine elektromagnetische Abfragestrahlung mit einem Abfragestrahlquerschnitt und einer Abfragefrequenz in die Probe eingestrahlt. Dabei ist die Abfragefrequenz von der Anregungsfrequenz verschieden und darüber hinaus so gewählt, dass die Abfragestrahlung nicht oder nur in geringem Maße von der Probe absorbiert wird.

Erfindungsgemäß wird die Probe so mit der Abfragestrahlung beleuchtet, dass sich ein Anregungsstrahlengang der Anregungsstrahlung und ein Abfragestrahlengang der Abfragestrahlung in einem Schnittpunkt in der Probe unter einem von null Grad verschiedenen Winkel schneiden. Entscheidend ist dabei, dass sich der Abfragestrahlquerschnitt der Abfragestrahlung über Bereiche des Anregungsstrahlquerschnitts mit voneinander verschiedener Anregungsintensität verteilt.

Die thermisch generierte Linse erzeugt dann in der Abfragestrahlung ein Interferenzmuster, so wie es beispielsweise aus dem Fresnelschen Biprismaversuch bekannt ist. Erfasst man die Musterintensität des Interferenzmusters der Abfragestrahlung in dem Abfragestrahlengang hinter der Probe an einem ersten Ort in einer Detektorebene als erstes Messsignal, so ist dieses charakteristisch für die Absorption der Anregungsstrahlung durch die Probe.

Ist die Anregungsstrahlung mit einer Modulationsfrequenz moduliert, so lassen sich die ersten, zweiten und optional dritten Messsignale nach der Modulationsfrequenz filtern, so dass ein Ausgabesignal erzeugt wird, welches, vorzugsweise ausschließlich, mit der Modulationsfrequenz modulierte Signalanteile enthält. Alternativ kann man das gleiche Ergebnis erzielt werden, indem das aus den ersten, zweiten und optional dritten Messsignalen gebildete Detektorsignal nach der Modulationsfrequenz gefiltert wird, so dass ein Ausgabesignal erzeugt wird, welches, vorzugsweise ausschließlich, mit der Modulationsfrequenz modulierte Signalanteile enthält. Die Filterung auf die Modulationsfrequenz erfolgt in einer Ausführungsform mithilfe eines Lock-In-Verstärkers.

Im Sinne der vorliegenden Anmeldung bezeichnen die Messsignale, die von dem Detektor, insbesondere seinen Sensorabschnitten, generierten (Roh-)Signale. Die addierten und subtrahierten Messsignale werden jeweils als Detektorsignal bezeichnet, ein ausgegebenes und die nach der Modulationsfrequenz gefilterten Signalanteile der Messsignale enthaltendes Detektorsignal wird als Ausgabesignal bezeichnet.

Das jeweilige Messsignal kann beschrieben werden als Produkt der Amplitude mit dem Cosinus der Phasendifferenz zwischen der Phase der Modulation der Anregungsstrahlung an dem Ort in der Detektorebene, an dem das Messsignal erfasst wird und der Phase der Modulation der Anregungsstrahlung an dem Ort in der Detektorebene mit der maximalen Intensität.

Dabei kann die Modulation der Anregungsstrahlung eine Amplitudenmodulation oder auch eine Frequenzmodulation sein. Wesentlich ist, dass sich durch die Modulation die in der Probe absorbierte Energie der Anregungsstrahlung periodisch ändert.

In der PCI mit gekreuzten, d.h. mit nicht zueinander parallelen Strahlengängen der Abfragestrahlung und der Anregungsstrahlung, weist die Selbst-Interferenz aufgrund der Linsenbildung durch die Anregungsstrahlung ein charakteristisches Muster auf.

Dieses Muster wird erfindungsgemäß räumlich selektiv an einem ersten Ort und einem zweiten Ort in einer einzigen Detektorebene erfasst und eine Differenz zwischen dem ersten Messsignal für den ersten Ort und dem zweiten Messsignal für den zweiten Ort gebildet, so dass das Detektorsignal ein differentielles ist.

Durch die Modulation der Anregungsstrahlung ist auch dem Interferenzmuster eine Modulation mit der Modulationsfrequenz aufgeprägt. Die Phase der Modulation variiert jedoch über das Interferenzmuster hinweg.

Wählt man den ersten und den zweiten Ort in der Detektorebene so, dass die Phasen der Modulation an den beiden Orten gegeneinander um einen von null Grad oder 360 Grad (oder einem ganzzahligen Vielfachen davon) verschiedenen Wert verschoben sind, so ist der Beitrag des "Com-mon-Mode"-Eigenrauschen der Anregungsstrahlung in dem differentiellen Detektorsignal erheblich reduziert.

Dieses Intensitätsrauschen der Strahlungsquelle für die Abfragestrahlung, insbesondere eines Lasers zum Erzeugen der Abfragestrahlung, welche das erfindungsgemäße Verfahren zu unterdrücken vermag, bildet den dominierenden Rauschbeitrag, der die Empfindlichkeitsgrenze bei der PCI im Stand der Technik typischerweise begrenzt.

In einer Ausführungsform der Erfindung liegt der Wert, um den die Phase der durch das periodische Modulieren der Anregungsstrahlung bewirkten periodischen Modulation der Abfragestrahlung an dem ersten Ort gegenüber der Phase der durch das periodische Modulieren der Anregungsstrahlung bewirkten periodischen Modulation der Abfragestrahlung an dem zweiten Ort verschoben ist in einem Bereich von 160 Grad bis 200 Grad, vorzugsweise in einem Bereich von 170 Grad bis 190 Grad und besonders bevorzugt bei 180 Grad. Es versteht sich, dass die Phasendifferenz von der Wahl des ersten Orts und des zweiten Orts abhängt.

In einer Ausführungsform liegt der Winkel, unter dem sich der Anregungsstrahlengang der Anregungsstrahlung und der Abfragestrahlengang der Abfragestrahlung schneiden, in einem Bereich von fünf Grad bis 30 Grad.

In einer Ausführungsform der Erfindung ist in dem Schnittpunkt des Anregungsstrahlengangs der Anregungsstrahlung und des Abfragestrahlengangs der Abfragestrahlung in der Probe der Abfragestrahlradius des Abfragestrahlquerschnitts größer, vorzugsweise mindestens dreimal größer und bevorzugt mindestens zehnmal größer, als der Anregungsstrahlradius des Anregungsstrahlquerschnitts.

Dabei wird in einer Ausführungsform als Anregungsstrahlradius und Abfragestrahlradius der Radius des jeweiligen Strahls bezeichnet, bei dem die Intensität auf einen Wert von $1/e^2$ bezogen auf das Intensitätsmaximum des jeweiligen Strahls abgefallen ist.

In einer weiteren Ausführungsform sind der Anregungsstrahlengang und der Abfragestrahlengang derart angeordnet, dass die Strahlachse des Anregungsstrahlengangs und die Strahlachse des Abfragestrahlengangs in dem Schnittpunkt einen Abstand voneinander aufweisen, der kleiner ist als ein Abfragestrahlradius des Abfragestrahlengangs in dem Schnittpunkt, wobei der Abstand vorzugsweise ein Drittel oder weniger beträgt als der Abfragestrahlradius des Abfragestrahlengangs in dem Schnittpunkt und besonders bevorzugt null beträgt. Dabei liegt das Intensitätsmaximum des jeweiligen Strahlengangs auf der Strahlachse.

In einer Ausführungsform des erfindungsgemäßen Verfahrens umfasst das Verfahren zusätzlich den Schritt:

J) Erfassen einer dritten Musterintensität des Interferenzmusters der Abfragestrahlung an einem dritten Ort in der Detektorebene als drittes Messsignal, so dass die Phase der periodischen Modulation der ersten Musterintensität der Abfragestrahlung an dem ersten Ort um einen von null Grad oder 360 Grad verschiedenen Wert gegenüber der Phase der durch das periodische Modulieren der Anregungsstrahlung bewirkten periodischen Modulation der dritten Musterintensität der Abfragestrahlung an dem dritten Ort verschoben ist,
wobei der Schritt G) zusätzlich den Schritt umfasst
b) Bilden einer Summe aus dem zweiten und dem dritten Messsignal und wobei das Bilden der Differenz in Schritt a) umfasst
Bilden einer Differenz zwischen dem ersten Messsignal und der Summe aus dem zweiten und dem dritten Messsignal und
wobei Schritt H) ein Filtern zumindest des ersten, des zweiten Messsignals und des dritten Messsignals oder des Detektorsignals umfasst.

Wählt man den ersten Ort zum Erfassen der ersten Musterintensität so, dass dieser ein Extremum der Intensitätsmodulation ist, so sind um diesen verteilt herum zwei Extrema der Intensitätsmodulation mit gegenüber dem ersten Ort verschobener Phase, insbesondere mit um 180 Grad verschobener Phase, angeordnet.

In einer Ausführungsform sind die zweiten und dritten Orte so gewählt, dass sie den gleichen Wert der Amplitude der Intensitätsmodulation gegenüber dem ersten Ort haben. Die Phasenverschiebungen an dem zweiten und dem dritten Ort haben in dieser Ausführungsform zudem den gleichen Wert der Phasenverschiebung gegenüber der Intensitätsmodulation an dem ersten Ort.

Misst man an den zweiten und dritten Orten die zweite und die dritte Musterintensität, so lässt sich durch Bilden der Summe der zweiten und dritten Messsignale, welche die zweite und die dritte Musterintensität repräsentieren, und nachfolgendes Bilden der Differenz zwischen dem ersten Messsignal und der Summe aus dem zweiten und dem dritten Messsignal ein Bias-freies Detektorsignal erzeugen.

Wenn sich, so wie es Voraussetzung für die vorliegende Erfindung ist, der Anregungsstrahlengang und der Abfragestrahlengang unter einem von null Grad verschiedenen Winkel schneiden, wobei der Anregungsstrahlquerschnitt und der Abfragestrahlquerschnitt in dem Sinne zueinander symmetrisch sind, dass sich die Mittenachsen, in denen die Maxima der Abfrage bzw. Anregungsintensitäten liegen, in etwa schneiden oder exakt schneiden, so hat das entstehende Interferenzmuster eine charakteristische Ausprägung, insbesondere eine charakteristische Symmetrie. Die Extrema der Intensitätsmodulation innerhalb des Interferenzmusters sind dann entlang einer Geraden senkrecht zu der von dem Anregungsstrahlengang und dem Abfragestrahlengang aufgespannten Ebene angeordnet.

Um eine möglichst effiziente, d.h. maximale Unterdrückung des Common-Mode-Rauschens zu erzielen, muss der zeitliche Mittelwert $\bar{S}_{20}$ des differentiellen Detektorsignals Null betragen. Dabei ist der Mittelwert $\bar{S}_{20}$ gegeben durch

$$\bar{S}_{20} = a\bar{S}_{16} - b\bar{S}_{19} \overset{!}{=} 0$$

Dabei ist $\bar{S}_{16}$ der zeitliche Mittelwert des in der von dem Anregungsstrahlengang und dem Abfragestrahlengang aufgespannten Ebene liegenden Extremum der Intensitätsmodulation und $\bar{S}_{19}$ ist der zeitliche Mittelwert des Summensignals aus dem zweiten und dem dritten Messsignal. Die Faktoren a und b bezeichnen die ersten und zweiten Verstärkungsfaktoren der beiden Signale $\bar{S}_{16}$ und $\bar{S}_{19}$, welche den Eingang der Differenzbildung in Schritt a) bilden.

Daher umfasst das erfindungsgemäße Verfahren in einer Ausführungsform in Schritt G) die Schritte

c) vor dem Schritt a) Verstärken des ersten Messsignals mit einem ersten Verstärkungsfaktor und
d) vor dem Schritt a) Verstärken entweder das zweiten Messsignals mit einem zweiten Verstärkungsfaktor oder der Summe aus dem zweiten und dem dritten Messsignal mit dem zweiten Verstärkungsfaktor und
e) Einstellen oder Regeln eines Verhältnisses aus dem ersten Verstärkungsfaktor und dem zweiten Verstärkungsfaktor, so dass ein zeitlicher Mittelwert des Detektorsignals im Wesentlichen gleich null ist.

Auf diese Weise kann die oben angegebene Gleichung durch einfache Wahl der ersten und zweiten Verstärkungsfaktoren a und b erfüllt und die Unterdrückung des Common-Mode-Rauschens maximiert werden.

In einer weiteren Ausführungsform der Erfindung sind der erste und der zweite Ort und vorzugsweise der dritte Ort in der Detektorebene derart angeordnet, dass eine die drei Orte verbindende Gerade im Wesentlichen senkrecht zu der von dem Anregungsstrahlengang und dem Abfragestrahlengang aufgespannten Ebene ist.

In einer weiteren Ausführungsform der Erfindung umfasst das Verfahren zusätzlich den Schritt K) Bilden eines Gesamtleistungssignals als Summe zumindest aus dem ersten und dem zweiten Messsignal, vorzugsweise aus dem ersten, dem zweiten und dem dritten Messsignal.

Dieses Summensignal bildet ein Maß für die Gesamtleistung der Abfragestrahlung. Zur Bildung des Gesamtleistungssignals werden in einer Ausführungsform der Erfindung weder die Messsignale noch das Gesamtleistungssignal selbst nach der Modulationsfrequenz gefiltert.

Die Optimierung der Unterdrückung des Common-Mode-Rauschens wird in einer Ausführungsform durch eine gezielte feste Einstellung des Verstärkungsverhältnisses a/b oder durch eine rückkopplungsgesteuerte dynamische Anpassung des Verstärkungsverhältnisses a/b erreicht.

Bildet man ein Differenzsignal zwischen dem zweiten Messsignal und dem dritten Messsignal, so erhält man ein Fehlersignal für die Justierung des Systems. Ein gaußförmig über den Abfragestrahlquerschnitt verteiltes Strahlprofil liegt genau dann symmetrisch über einer Detektoranordnung, wenn der DC-Anteil des Differenzsignals zwischen dem zweiten Messsignal und dem dritten Messsignal bei der Modulationsfrequenz null ist. Es versteht sich, dass diese Bedingung gilt, wenn der zweite Ort und der dritte Ort in der Detektorebene symmetrisch um die von dem Anregungsstrahlengang und dem Abfragestrahlengang aufgespannte Ebene herum angeordnet sind.

Daher umfasst das erfindungsgemäße Verfahren in einer Ausführungsform zusätzlich die Schritte

L) Bilden eines Fehlersignals als Differenz aus dem zweiten und dem dritten Messsignal und
M) Justieren zumindest des Anregungsstrahlengangs oder des Abfragestrahlengangs, so dass das Fehlersignal im Wesentlichen gleich null ist.

Das so gebildete Fehlersignal erlaubt in einer Ausführungsform auch eine aktive Stabilisierung des Messsystems durch eine aktorgesteuerte Nachführung der Justierung zumindest des Anregungsstrahlengangs oder des Abfragestrahlengangs zur weiteren Steigerung der Messempfindlichkeit und der Robustheit gegenüber mechanischen Störeinflüssen.

Daher erfolgt in einer Ausführungsform des erfindungsgemäßen Verfahrens das Justieren in Schritt M) automatisiert und geregelt, wobei das Fehlersignal die Regelgröße ist.

In einer Ausführungsform der Erfindung beträgt ein Abstand der Detektorebene von dem Schnittpunkt des Anregungsstrahlengangs der Anregungsstrahlung und des Abfragestrahlengangs der Abfragestrahlung in der Probe 30 cm oder weniger, bevorzugt 10 cm oder weniger und besonders bevorzugt 5 cm oder weniger.

In einer weiteren Ausführungsform der vorliegenden Erfindung erfolgt das Erfassen der Musterintensitäten in den Schritten F) und I) und vorzugsweise in Schritt J) im Nahfeld hinter dem Schnittpunkt des Anregungsstrahlengangs und des Abfragestrahlengangs.

Das zu erfassende Interferenzmuster bildet sich unmittelbar hinter dem Kreuzungspunkt des Anregungsstrahlengangs und des Abfragestrahlengangs aus. Daher kann das erfindungsgemäße Verfahren in einer Ausführungsform sehr kompakt und raumsparend realisiert werden.

In einer weiteren Ausführungsform der vorliegenden Erfindung erfolgt in dem Abfragestrahlengang zwischen dem Schneiden des Anregungsstrahlengangs und des Abfragestrahlengangs und dem Erfassen der Musterintensitäten in den Schritten F) und I) und vorzugsweise in Schritt J) keine Strahlumlenkung des Abfragestrahlengangs, beispielsweise mit einem Spiegel.

Darüber hinaus wird zumindest eine der zuvor genannten Aufgaben auch durch einen photothermischen Absorptionssensor zum Bestimmen einer Absorption einer elektromagnetischen Anregungsstrahlung in einer Probe gemäß dem darauf nachstehend gerichteten unabhängigen Anspruch gelöst.

Dazu weist der photothermischen Absorptionssensor der eingangs genannten Art in einer Detektorebene einen ersten Sensorabschnitt und einen von dem ersten Sensorabschnitt beabstandeten zweiten Sensorabschnitt auf, wobei der erste und der zweite Sensorabschnitt derart ausgestaltet und angeordnet sind, dass in dem Betrieb des Absorptionssensors der erste Sensorabschnitt die erste Musterintensität erfasst und das erste Messsignal erzeugt und der zweite Sensorabschnitt eine zweite Musterintensität des Interferenzmusters der Abfragestrahlung erfasst und ein zweites Messsignal erzeugt, wobei die Phase einer durch das periodische Modulieren der Anregungsstrahlung bewirkten periodischen Modulation der Abfragestrahlung auf dem ersten Sensorabschnitt um einen von null Grad oder 360 Grad verschiedenen Wert gegenüber der Phase der durch das periodische Modulieren der Anregungsstrahlung bewirkten periodischen Modulation der Abfragestrahlung auf dem zweiten Sensorabschnitt verschoben ist, wobei die Verarbeitungseinrichtung derart mit dem Detektor verbunden ist, dass die Verarbeitungseinrichtung in dem Betrieb des Absorptionssensors das zweite Messsignal von dem Detektor erhält, wobei die Verarbeitungseinrichtung derart ausgestaltet ist, dass sie in dem Betrieb des Absorptionssensors ein differenzielles Detektorsignal als Differenz zwischen dem ersten Messsignal und dem zweiten Messsignal bildet, und das Filter derart ausgestaltet ist, dass in dem Betrieb des Absorptionssensors das Filter zumindest das erste Messsignal und das zweite Messsignal oder das Detektorsignal nach der Modulationsfrequenz filtert, so dass das Ausgabesignal mit der Modulationsfrequenz modulierte Signalanteile des ersten Messsignals und des zweiten Messsignals enthält.

Soweit im folgenden Aspekte der Erfindung im Hinblick auf den Absorptionssensor beschrieben werden, so gelten diese auch für das entsprechende Verfahren zum photothermischen Bestimmen einer Absorption einer elektromagnetischen Anregungsstrahlung in einer Probe und umgekehrt. Soweit das Verfahren mit dem Absorptionssensor gemäß dieser Erfindung ausgeführt wird, so weist der Absorptionssensor entsprechende hierfür erforderliche Einrichtungen auf. Insbesondere sind Ausführungsformen des Absorptionssensors zum Ausführen der zuvor beschriebenen Ausführungsformen des Verfahrens geeignet.

In einer Ausführungsform des Absorptionssensors weist der Detektor einen dritten Sensorabschnitt in der Detektorebene auf, wobei der dritte Sensorabschnitt von dem ersten Sensorabschnitt und dem zweiten Sensorabschnitt beabstandet angeordnet ist, wobei der dritte Sensorabschnitt derart ausgestaltet und angeordnet ist, dass in dem Betrieb des Absorptionssensors der dritte Sensorabschnitt eine dritte Musterintensität des Interferenzmusters der Abfragestrahlung erfasst und ein drittes Messsignal erzeugt, wobei die Phase der durch das periodische Modulieren der Anregungsstrahlung bewirkten periodischen Modulation der Abfragestrahlung auf dem ersten Sensorabschnitt um einen von null Grad oder 360 Grad verschiedenen Wert gegenüber der Phase der durch das periodische Modulieren der Anregungsstrahlung bewirkten periodischen Modulation der Abfragestrahlung auf dem dritten Sensorabschnitt verschoben ist, wobei die Verarbeitungseinrichtung derart mit dem Detektor verbunden ist, dass die Verarbeitungseinrichtung in den Betrieb des Absorptionssensors das dritte Messsignal von dem Detektor erhält, wobei die Verarbeitungseinrichtung derart ausgestaltet ist, dass sie in dem Betrieb des Absorptionssensors die Differenz zwischen dem ersten Messsignal und einer Summe aus dem zweiten und dem dritten Messsignal als das Detektorsignal bildet, so dass das Detektorsignal ein differentielles Signal ist, und wobei das Filter derart ausgestaltet ist, dass in dem Betrieb des Absorptionssensors das Filter zumindest das erste Messsignal, das zweite Messsignal und das dritte Messsignal oder das Detektorsignal nach der Modulationsfrequenz filtert, so dass das Ausgabesignal mit der Modulationsfrequenz modulierte Signalanteile des ersten Messsignals, des zweiten Messsignals und des dritten Messsignals enthält.

In einer weiteren Ausführungsform der Erfindung sind der erste und der zweite Sensorabschnitt und vorzugsweise der dritte Sensorabschnitt derart angeordnet, dass eine die drei Sensorabschnitte verbindende Gerade im Wesentlichen senkrecht zu einer von dem Anregungsstrahlengang und dem Abfragestrahlengang aufgespannten Ebene ist.

In einer weiteren Ausführungsform ist dabei der erste Sensorabschnitt derart angeordnet, dass er von der von dem Anregungsstrahlengang und dem Abfragestrahlengang aufgespannten Ebene geschnitten wird.

In einer weiteren Ausführungsform der Erfindung ist die Detektorebene senkrecht zu der von dem Anregungsstrahlengang und dem Abfragestrahlengang aufgespannten Ebene.

Wenn im Sinne der vorliegenden Anmeldung beschrieben wird, dass der erste Ort, der zweite Ort und der dritte Ort in der Detektorebene angeordnet sind, so ist damit gemeint, dass diese in einer einzigen gemeinsamen Ebene angeordnet sind. Gleiches gilt für die ersten, zweiten und dritten Sensorabschnitte des Detektors.

In einer Ausführungsform der Erfindung ist der Detektor mit den ersten und zweiten Sensorabschnitten sowie vorzugsweise mit dem dritten Sensorabschnitt ein gesondert dafür konstruiertes und strukturiertes Bauelement. In einer Ausführungsform jedoch ist der Sensor aus drei separaten Sensorabschnitten, beispielsweise drei Fotodioden zusammengebaut.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit gleichen Bezugszeichen bezeichnet.

Fig. 1    ist eine schematische Darstellung einer Ausführungsform des photothermischen Absorptionssensors gemäß der vorliegenden Erfindung.

Fig. 2 a)    ist eine schematische Darstellung der Phasenverteilung der Modulation des Interferenzmusters in der Detektorebene.

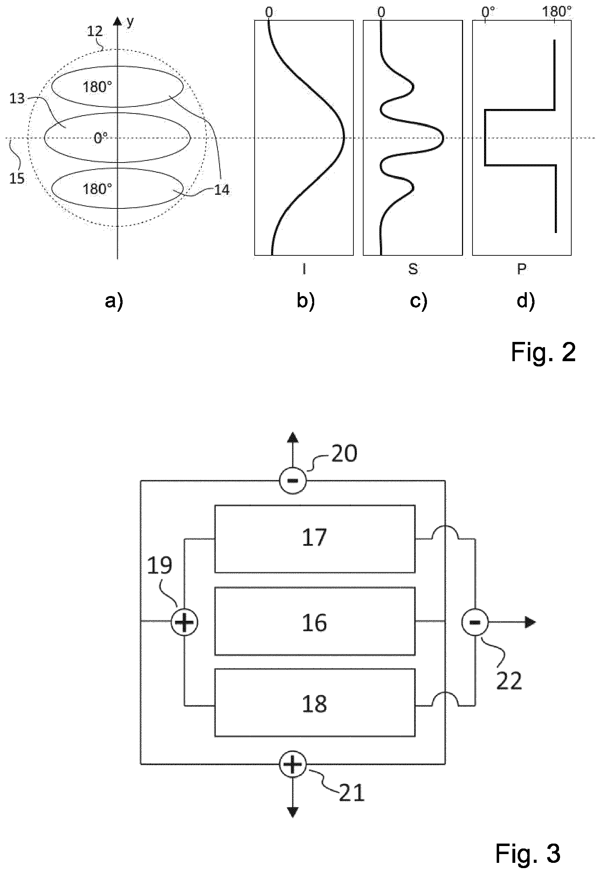

Fig. 2 b)    ist eine schematische Auftragung der Intensität I der Abfragestrahlung über der Abfragestrahlquerschnitt entlang der y-Achse des Detektors aus Figur 2 a).

Fig. 2 c)    ist eine schematische Auftragung des Detektorsignals S der Abfragestrahlung über der Abfragestrahlquerschnitt entlang der y-Achse des Detektors aus Figur 2 a).

Fig. 2 d)    ist eine schematische Auftragung der Phase P der Abfragestrahlung über der Abfragestrahlquerschnitt entlang der y-Achse des Detektors aus Figur 2 a).

Fig. 3    ist eine schematische Darstellung des Detektors in der Detektorebene sowie der Signalauswertung.

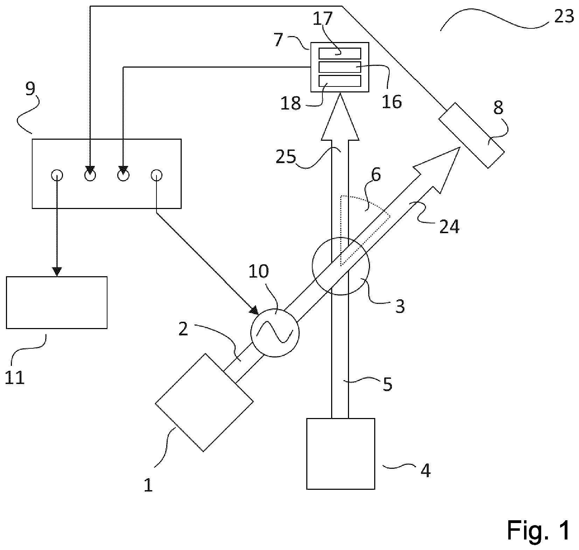

Der photothermische Absorptionssensor 23 ist in Fig. 1 in einer schematischen Ansicht von oben dargestellt. Der photothermische Absorptionssensor 23 umfasst einen Laser 1 als Strahlungsquelle für die Anregungsstrahlung 2, einen Laser 4 als Strahlungsquelle für die Abfragestrahlung 5, einen Detektor 7 zum Erfassen des Interferenzmusters, einen Detektor 8 zum Erfassen der Gesamtleistung der Anregungsstrahlung 2, einen Chopper 10 als Modulationseinrichtung zum Aufprägen einer Amplitudenmodulation auf die Anregungsstrahlung 2, eine Verarbeitungseinrichtung in Form eines Lock-in-Verstärker 9 sowie eines Rechners 11.

In dem hier beschriebenen Beispiel wird ein Probengas 3 als Probe im Sinne der vorliegenden Anmeldung analysiert, wobei es die Aufgabe des photothermischen Absorptionssensors ist, den Gehalt an Ammoniak ($NH_3$) in einem Gasgemisch des Probengases 3 zu bestimmen.

Die Anregungsstrahlung erzeugt in dem Probengas 3 eine über den Anregungsstrahlquerschnitt variierende thermische Erwärmung, die im Wesentlichen der Intensitätsverteilung der Anregungsstrahlung innerhalb des Anregungsstrahlquerschnitts folgt. Die Laser 1, 4 generieren sowohl die Anregungsstrahlung 2 als auch die Abfragestrahlung 5 mit gaußförmigen Intensitätsverteilungen über ihren jeweiligen Strahlquerschnitt.

Das Probengas 3 absorbiert bei der Anregungsfrequenz der Anregungsstrahlung 2 von 1103,46cm$^{-1}$. Daher generiert die Anregungsstrahlung in der Mitte des Anregungsstrahlquerschnitts eine stärkere Erwärmung des Probengases als symmetrisch um die Mitte herum.

Die beschriebene lokale Verteilung der Erwärmung des Probengases 3 über den Anregungsstrahlquerschnitt hinweg führt zu einer Brechungsindexvariation, die im Wesentlichen dem Erwärmungsprofil über den Anregungsstrahlquerschnitt 2 folgt.

Um später in dem Lock-in-Verstärker 9 bzw. in dem Rechner 11 eine Normierung auf die Gesamtleistung der Anregungsstrahlung 2 vornehmen zu können, wird die Leistung der Anregungsstrahlung 2 hinter dem Probengas 3 mit dem Detektor 8 erfasst.

Die Abfragestrahlung 5 hat eine Abfragefrequenz, die von der Anregungsfrequenz verschieden ist und von der Absorptionsfrequenz des Probengases 3 verschieden ist. Die Abfragestrahlung 5 passiert daher das Probengas 3 im Wesentlichen ohne eine nennenswerte Absorption zu erfahren. Der über den Strahlquerschnitt der Anregungsstrahlung 2 variierende Brechungsindex innerhalb des Probengases 3 führt jedoch zu einer Selbstinterferenz der Abfragestrahlung 5, so wie sie beispielsweise auch beim Fresnelschen Biprismaversuch zu beobachten ist.

Die Abfragestrahlung 5 schneidet die Anregungsstrahlung 2 so, dass der Anregungsstrahlengang 24 der Anregungsstrahlung 2 und der Abfragestrahlengang 25 der Abfragestrahlung 5 sich unter einem Winkel 6 von etwa zehn Grad schneiden. Dabei schneiden sich bei idealer Justierung des Absorptionssensors 23 die Mittenachsen des Anregungsstrahlengangs 24 und des Abfragestrahlengangs 25.

Im Nahfeld hinter dem Kreuzungspunkt der Anregungsstrahlung 2 und der Abfragestrahlung 5 in dem Probengas 3 bildet sich so ein Interferenzmuster aus, welches charakteristisch für den Strahlquerschnitt der Anregungsstrahlung 2, für die Modulation der Anregungsstrahlung 2 sowie für die Absorption der Anregungsstrahlung 2 durch das in dem Probengas 3 enthaltene $NH_3$ ist.

Enthält das Probengas 3 das zu analysierende $NH_3$ nicht, so wird die Anregungsstrahlung 2 in dem Probengas 3 nicht absorbiert und es entsteht kein Interferenzmuster, die Abfragestrahlung 5 hat auch hinter dem Kreuzungspunkt in dem Probengas 3 eine im Wesentlichen ungestörte gaußförmige Intensitätsverteilung. Sobald das Probengas das $NH_3$ enthält, kommt es zur Ausbildung eines für die Konzentration des $NH_3$ charakteristischen Interferenzmusters. Dieses wird mithilfe eines Detektors 7 in der Detektorebene kurz hinter dem Kreuzungspunkt in dem Probengas 3 erfasst.

Zum Erfassen des Interferenzmusters 12 ist ein Detektor 7 vorgesehen, welcher in der Detektorebene einen ersten Sensorabschnitt 16 an einem ersten Ort, einen zweiten Sensorabschnitt 17 an einem zweiten Ort und einen dritten Sensorabschnitt 18 an einem dritten Ort aufweist. Dabei ist die Detektorebene, anders als in Fig. 1 schematisch zu erkennen, senkrecht zur Strahlrichtung der Abfragestrahlung 5 angeordnet. Der Detektor 7 erstreckt sich also nicht wie gezeigt in der Ebene der Darstellung (Blattebene), sondern senkrecht dazu.

Die Absorption und damit die thermische Erwärmung des Probengases 3 ist mit der von dem Lock-in-Verstärker 9 vorgegebenen Modulationsfrequenz mittels des Choppers 10 der Anregungsstrahlung 2 aufgeprägten Modulationsfrequenz moduliert. Diese Modulation findet sich auch in dem Interferenzmuster 12 wieder.

In dem Interferenzmuster 12 auf dem Detektor 7 ist zu beobachten, dass die Modulation über das Interferenzmuster 12 hinweg unterschiedliche Amplituden und Phasen aufweist. Dies wird nun Anhand der Darstellungen der Figuren 2 a) bis d) beschrieben. Das Interferenzmuster 12 in der Detektorebene ist schematisch in Fig. 2 a) dargestellt. Figur 2 b) zeigt die über den Abfragestrahlquerschnitt hinweg gaußförmige Verteilung der Intensität I der Abfragestrahlung in der Detektorebene. Figur 2 c) zeigt weiterhin die mit der Modulationsfrequenz modulierten Signalanteile S des Messsignals über den Abfragestrahlquerschnitt entlang der y-Achse hinweg. In der von der Anregungsstrahlung 2 und der Abfragestrahlung 5 aufgespannten Ebene 15 ist die Modulation maximal. Darüber hinaus weist die Modulation in der y-Richtung (senkrecht zu der von dem Anregungsstrahlengang und dem Abfragestrahlengang aufgespannten Ebene 16) symmetrisch um die maximale Modulation 13 herum angeordnete Nebenmaxima 14 auf, in dem die Modulation jedoch um 180 Grad gegenüber der Modulation in dem Hauptmaximum 13 phasenverschoben ist. Die Phasenlage P des Messsignals S über den Abfragestrahlquerschnitt entlang der y-Achse hinweg ist in Figur 2 d) aufgetragen.

Diese Phasenbeziehung macht man sich nun zunutze, um das Common-Mode-Rauschen des Lasers 1 für die Anregungsstrahlung 2 zu reduzieren und damit die Sensitivität des Absorptionssensors 23 zu erhöhen.

Der in Figur 1 schematisch dargestellte Lock-in-Verstärker 9 ist ein Drei-Kanal-Lock-in-Verstärker, welcher von dem Detektor 7 die ersten bis dritten Messsignale der ersten bis dritten Sensorabschnitte 16 bis 18 erhält und diese bei der Modulationsfrequenz filtert soweit diese zur Bildung des differenziellen Detektorsignals 20 als Ausgangssignal verwendet werden. Alternativ wäre es möglich einen Einkanal-Lock-in-Verstärker zum Filtern des Detektorsignals 20 nach der Modulationsfrequenz einzusetzen.

Allerdings enthalten die drei gefilterten Messsignale auch nach der Filterung bei der Modulationsfrequenz nach wie vor den von dem Common-Mode-Rauschen des Lasers 1 generierten Rauschanteil.

Um diesen Rauschanteil zu reduzieren, werden die drei Messsignale von den drei Sensorabschnitten 16 bis 18 nach dem Lock-in-Verstärker 9 in dem Rechner 11 wie im Folgenden beschrieben weiterverarbeitet, so dass das schlussendlich von dem Rechner 11 erzeugte und ausgegebene Detektorsignal ein differentielles Signal ist.

Die Messsignale $S_{17}$, $S_{18}$ der äußeren Sensorabschnitte 17, 18 mit phasengleicher Modulation werden im Addierer 19 zum Signal $S_{19} = S_{17} + S_{18}$ summiert. Im Subtrahierer 20 wird das Summensignal aus dem Addierer 19 vom Messsignal des mittleren Sensorabschnitts 16 subtrahiert, um das differenzielle Signal $S_{20}$ als differentielles Detektorsignal zu erhalten.

In einem weiteren Addierer 21 wird das Signal $S_{21}$ proportional zur Gesamtleistung des Abfragestrahls gewonnen. Hierzu werden in diesem Addierer nur die positiven Amplituden der Signale, ungeachtet der Phasen, addiert. Der Subtrahierer 22 schließlich bildet das Differenzsignal $S_{22} = S_{17} - S_{18}$ der äußeren Sensorabschnitte 17, 18, welches als Fehlersignal zum Justieren des Absorptionssensors 23 dient.

Um eine maximale Unterdrückung des Common-Mode-Rauschens zu erzielen, muss der Mittelwert $\overline{S}_{20}$ des Differenz-Signals aus dem Subtrahierer 20 Null betragen: $\overline{S}_{20} = a\,\overline{S}_{16} - b\,\overline{S}_{19} = 0$ (eq. 1).

Dabei sind $\overline{S}_i (i = 16,17,18)$ die zeitlichen Mittelwerte der Ausgangssignale der entsprechenden Elemente 19, 20, 21, 22. Die Faktoren $a$ und $b$ kennzeichnen die Verstärkungsfaktoren der einzelnen Eingangssignale des Subtrahierers 20.

Die zuvor genannte Gleichung (eq.1) wird in dem Subtrahierer 20 durch eine feedback-gesteuerte dynamische Anpassung des eingestellten Verstärkungsverhältnisses $a/b$ erreicht.

Das Differenzsignal $S_{22}$ der vorzeichengleichen äußeren Sensorabschnitte 17, 18 dient zudem als Fehlersignal für die automatisierte Justierung des Absorptionssensors. Das gaußförmige Abfragestrahlprofil des Abfragestrahls liegt genau dann symmetrisch über der Anordnung der Sensorabschnitte 16, 17, 18, wenn der DC-Anteil (Gleichspannung/-strom) des Signals null ist. Die Kreuzungsebene 15 von Pump- und Abfragestrahl liegt dann symmetrisch zu der Anordnung der Sensorabschnitte 16, 17, 18, wenn der AC-Anteil (Wechselspannung/-strom) von $S_{22}$ bei der Modulationsfrequenz null ist.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus.

## Bezugszeichen

| | |
|---|---|
| 1, 4 | Laser |
| 2 | Anregungsstrahlung |
| 3 | Probengas |
| 5 | Abfragestrahlung |
| 6 | Winkel |
| 7, 8 | Detektor |
| 9 | Lock-in-Verstärker |
| 10 | elektrooptischer Modulator |
| 11 | Rechner |
| 12 | Interferenzmuster |
| 13 | maximale Modulation, Hauptmaximum |
| 14 | maximale Modulation, Nebenmaxima |
| 15 | Ebene |
| 16 | erster Sensorabschnitt |
| 17 | zweiter Sensorabschnitt |
| 18 | dritter Sensorabschnitt |
| 19, 21 | Summenbildung |
| 20, 22 | Differenzbildung |
| 23 | photothermischer Absorptionssensor |
| 24 | Anregungsstrahlengang |
| 25 | Abfragestrahlengang |

## Patentansprüche

1. Verfahren zum photothermischen Bestimmen einer Absorption einer elektromagnetischen Anregungsstrahlung in einer Probe (3) mit den Schritten

   A) Erzeugen der Anregungsstrahlung (2) mit einer über einen Anregungsstrahlquerschnitt der Anregungsstrahlung variierenden Anregungsintensität und mit einer Anregungsfrequenz, wobei die Anregungsfrequenz gleich einer Absorptionsfrequenz der Probe ist,
   B) periodisches Modulieren der Anregungsstrahlung mit einer Modulationsfrequenz,
   C) Beleuchten der Probe mit der periodisch modulierten Anregungsstrahlung,
   D) Erzeugen einer elektromagnetischen Abfragestrahlung mit einem Abfragestrahlquerschnitt und einer Abfragefrequenz, wobei die Abfragefrequenz von der Anregungsfrequenz verschieden ist,
   E) Beleuchten der Probe mit der Abfragestrahlung,

   so dass sich ein Anregungsstrahlengang der Anregungsstrahlung und ein Abfragestrahlengang der Abfragestrahlung unter einem von Null Grad verschiedenen Winkel in einem Schnittpunkt in der Probe schneiden und

so dass sich der Abfragestrahlquerschnitt über Bereiche des Anregungsstrahlquerschnitts mit voneinander verschiedener Anregungsintensität verteilt,

F) Erfassen einer ersten Musterintensität eines Interferenzmusters der Abfragestrahlung in dem Abfragestrahlengang hinter der Probe an einem ersten Ort in einer Detektorebene als erstes Messsignal und

G) Bilden eines Detektorsignals aus dem ersten Messsignal und

H) Filtern des ersten Messsignals oder des Detektorsignals nach der Modulationsfrequenz, so dass ein Ausgabesignal erzeugt wird, wobei das Ausgabesignal mit der Modulationsfrequenz modulierte Signalanteile des ersten Messsignals enthält, **dadurch gekennzeichnet, dass** das Verfahren weiterhin die Schritte umfasst

I) Erfassen einer zweiten Musterintensität des Interferenzmusters der Abfragestrahlung an einem zweiten Ort in der Detektorebene als zweites Messsignal,

so dass die Phase einer durch das periodische Modulieren der Anregungsstrahlung bewirkten periodischen Modulation der ersten Musterintensität der Abfragestrahlung an dem ersten Ort um einen von null Grad oder 360 Grad verschiedenen Wert gegenüber der Phase der durch das periodische Modulieren der Anregungsstrahlung bewirkten periodischen Modulation der zweiten Musterintensität der Abfragestrahlung an dem zweiten Ort verschoben ist, und der Schritt G) den Schritt umfasst

a) Bilden einer Differenz zwischen dem ersten Messsignal und dem zweiten Messsignal, so dass das Detektorsignal ein differenzielles Signal ist,

wobei Schritt H) ein Filtern zumindest des ersten und des zweiten Messsignals oder des Detektorsignals umfasst, so dass das Ausgabesignal mit der Modulationsfrequenz modulierte Signalanteile des ersten Messsignals und des zweiten Messsignals enthält.

2. Verfahren nach dem vorhergehenden Anspruch, wobei in dem Schnittpunkt des Anregungsstrahlengangs der Anregungsstrahlung und des Abfragestrahlengangs der Abfragestrahlung in der Probe der Abfragestrahlradius des Abfragestrahlquerschnitts größer ist, vorzugsweise mindestens dreimal größer und bevorzugt mindestens zehnmal größer ist, als der Anregungsstrahlradius des Anregungsstrahlquerschnitts.

3. Verfahren nach einem der vorhergehenden Ansprüche, wobei der Anregungsstrahlengang und der Abfragestrahlengang in dem Schnittpunkt derart angeordnet sind, dass die Strahlachse des Anregungsstrahlengangs und die Strahlachse des Abfragestrahlengangs einen Abstand voneinander aufweisen, der kleiner ist als ein Abfragestrahlradius des Abfragestrahlengangs in dem Schnittpunkt, vorzugsweise ein Drittel oder weniger beträgt als der Abfragestrahlradius des Abfragestrahlengangs in dem Schnittpunkt und besonders bevorzugt null beträgt.

4. Verfahren einem der vorhergehenden Ansprüche, wobei die Phase der durch das periodische Modulieren der Anregungsstrahlung bewirkten periodischen Modulation der ersten Musterintensität der Abfragestrahlung an dem ersten Ort um einen Wert in einem Bereich von 160 Grad bis 200 Grad, vorzugsweise in einem Bereich von 170 Grad bis 190 Grad und besonders bevorzugt von 180 Grad gegenüber der Phase der durch das periodische Modulieren der Anregungsstrahlung bewirkten periodischen Modulation der zweiten Musterintensität der Abfragestrahlung an dem zweiten Ort verschoben ist.

5. Verfahren nach einem der vorhergehenden Ansprüche, wobei das Verfahren zusätzlich den Schritt umfasst

J) Erfassen einer dritten Musterintensität des Interferenzmusters der Abfragestrahlung an einem dritten Ort in der Detektorebene als drittes Messsignal, so dass die Phase der periodischen Modulation der ersten Musterintensität der Abfragestrahlung an dem ersten Ort um einen von null Grad oder 360 Grad verschiedenen Wert gegenüber der Phase der durch das periodische Modulieren der Anregungsstrahlung bewirkten periodischen Modulation der dritten Musterintensität der Abfragestrahlung an dem dritten Ort verschoben ist,

wobei der Schritt G) zusätzlich den Schritt umfasst

b) Bilden einer Summe aus dem zweiten und dem dritten Messsignal und wobei das Bilden der Differenz in Schritt a) umfasst

Bilden einer Differenz zwischen dem ersten Messsignal und der Summe aus dem zweiten und dem dritten Messsignal und

wobei Schritt H) ein Filtern zumindest des ersten, des zweiten Messsignals und des dritten Messsignals oder des Detektorsignals umfasst.

6. Verfahren nach einem der vorhergehenden Ansprüche, wobei der Schritt G) zusätzlich die Schritte umfasst

c) vor dem Schritt a) Verstärken des ersten Messsignals mit einem ersten Verstärkungsfaktor und

d) vor dem Schritt a) Verstärken entweder des zweiten Messsignals mit einem zweiten Verstärkungsfaktor oder der Summe aus dem zweiten und dem dritten Messsignal mit dem zweiten Verstärkungsfaktor und

e) Einstellen oder Regeln eines Verhältnisses aus dem ersten Verstärkungsfaktor und dem zweiten Verstärkungsfaktor, so dass ein zeitlicher Mittelwert des Detektorsignals im Wesentlichen gleich null ist.

7. Verfahren nach einem der vorhergehenden Ansprüche, wobei das Verfahren zusätzlich den Schritt umfasst
K) Bilden eines Gesamtleistungssignals als Summe zumindest aus dem ersten und dem zweiten Messsignal, vorzugsweise aus dem ersten, dem zweiten und dem dritten Messsignal.

8. Verfahren nach einem der vorhergehenden Ansprüche soweit von Anspruch 3 abhängig, wobei das Verfahren zusätzlich die Schritte umfasst

L) Bilden eines Fehlersignals als Differenz aus dem zweiten und dem dritten Messsignal und
M) Justieren zumindest des Anregungsstrahlengangs oder des Abfragestrahlengangs, so dass das Fehlersignal im Wesentlichen gleich Null ist.

9. Verfahren nach dem vorhergehenden Anspruch, wobei das Justieren in Schritt M) automatisiert und geregelt erfolgt, wobei das Fehlersignal die Regelgröße ist.

10. Verfahren nach einem der vorhergehenden Ansprüche, wobei ein Abstand der Detektorebene von dem Schnittpunkt des Anregungsstrahlengangs der Anregungsstrahlung und des Abfragestrahlengangs der Abfragestrahlung in der Probe 30 cm oder weniger, bevorzugt 10 cm oder weniger und besonders bevorzugt 5 cm oder weniger beträgt.

11. Verfahren nach einem der vorhergehenden Ansprüche, wobei in dem Abfragestrahlengang zwischen dem Schneiden des Anregungsstrahlengangs und des Abfragestrahlengangs und dem Erfassen der Musterintensitäten in den Schritten F) und I) und vorzugsweise in Schritt J) keine Strahlumlenkung erfolgt.

12. Photothermischer Absorptionssensor (23) zum Bestimmen einer Absorption einer elektromagnetischen Anregungsstrahlung in einer Probe (3) mit

einer Strahlungsquelle (1), die derart ausgestaltet ist, dass die Strahlungsquelle (1) in einem Betrieb des Absorptionssensors (23) die Anregungsstrahlung (2) mit einer über einen Anregungsstrahlquerschnitt der Anregungsstrahlung (2) variierenden Anregungsintensität und mit einer Anregungsfrequenz erzeugt und abstrahlt, einer Modulationseinrichtung (10), die derart ausgestaltet und angeordnet ist, dass die Modulationseinrichtung (10) in dem Betrieb des Absorptionssensors (23) die Anregungsstrahlung (2) mit einer Modulationsfrequenz periodisch moduliert,
einer Strahlungsquelle (4), die derart ausgestaltet ist, dass die Strahlungsquelle (4) in dem Betrieb des Absorptionssensors (23) eine elektromagnetische Abfragestrahlung (5) mit einem Abfragestrahlquerschnitt und einer Abfragefrequenz erzeugt und abstrahlt, wobei die Abfragefrequenz von der Anregungsfrequenz verschieden ist, einem Detektor (7), der derart ausgestaltet und angeordnet ist, dass der Detektor (7) in dem Betrieb des Absorptionssensors (23) eine erste Musterintensität eines Interferenzmusters (12) der Abfragestrahlung (5) in einem Abfragestrahlengang (25) der Abfragestrahlung (5) hinter der Probe (3) erfasst und ein erstes Messsignal erzeugt, und
einer Verarbeitungseinrichtung (9, 11), die derart mit dem Detektor (7) verbunden ist, dass die Verarbeitungseinrichtung (11) in dem Betrieb des Absorptionssensors (23) das erste Messsignal von dem Detektor (7) erhält,
wobei ein Anregungsstrahlengang (24) der von der Strahlungsquelle (1) abgestrahlten Anregungsstrahlung (2) und der Abfragestrahlengang (25) derart ausgestaltet und angeordnet sind, dass in dem Betrieb des Absorptionssensors (23) die Probe (3) mit der periodisch modulierten Anregungsstrahlung (2) und mit der Abfragestrahlung (5) derart beleuchtet wird, dass sich der Anregungsstrahlengang (24) und der Abfragestrahlengang (25) unter einem von Null Grad verschiedenen Winkel (6) in einem Schnittpunkt in der Probe (3) schneiden und dass sich der Abfragestrahlquerschnitt über Bereiche des Anregungsstrahlquerschnitts mit voneinander verschiedener Intensität verteilt, wobei die Verarbeitungseinrichtung (9, 11) ein Filter umfasst, wobei das Filter derart ausgestaltet ist, dass in dem Betrieb des Absorptionssensors (23) das Filter das erste Messsignal oder ein aus dem ersten Messsignal gebildetes Detektorsignal nach der Modulationsfrequenz filtert, so dass ein Ausgabesignal erzeugt wird, wobei das Ausgabesignal mit der Modulationsfrequenz modulierte Signalanteile des ersten Messsignals enthält,

**dadurch gekennzeichnet, dass**

der Detektor (7) in einer Detektorebene einen ersten Sensorabschnitt (16) und einen von dem ersten Sensorabschnitt (16) beabstandeten zweiten Sensorabschnitt (17) aufweist, wobei der erste und der zweite Sensorabschnitt (16, 17), derart ausgestaltet und angeordnet sind, dass in dem Betrieb des Absorptionssensors (23) der erste Sensorabschnitt (16) die erste Musterintensität erfasst und das erste Messsignal erzeugt und der zweite Sensorabschnitt (17) eine zweite Musterintensität des Interferenzmusters (12) der Abfragestrahlung (5) erfasst und ein zweites Messsignal erzeugt,

wobei die Phase einer durch das periodische Modulieren der Anregungsstrahlung (2) bewirkten periodischen Modulation der Abfragestrahlung (5) auf dem ersten Sensorabschnitt (16) um einen von null Grad oder 360 Grad verschiedenen Wert gegenüber der Phase der durch das periodische Modulieren der Anregungsstrahlung (2) bewirkten periodischen Modulation der Abfragestrahlung (5) auf dem zweiten Sensorabschnitt (17) verschoben ist,

wobei die Verarbeitungseinrichtung (9, 11) derart mit dem Detektor verbunden ist, dass die Verarbeitungseinrichtung (9, 11) in dem Betrieb des Absorptionssensors (23) das zweite Messsignal von dem Detektor (7) erhält,

wobei die Verarbeitungseinrichtung (9, 11) derart ausgestaltet ist, dass sie in dem Betrieb des Absorptionssensors (23) ein differenzielles Detektorsignal als Differenz zwischen dem ersten Messsignal und dem zweiten Messsignal bildet, und

das Filter derart ausgestaltet ist, dass in dem Betrieb des Absorptionssensors (23) das Filter zumindest das erste Messsignal und das zweite Messsignal oder das Detektorsignal nach der Modulationsfrequenz filtert, so dass das Ausgabesignal mit der Modulationsfrequenz modulierte Signalanteile des ersten Messsignals und des zweiten Messsignals enthält.

13. Absorptionssensor (23) nach dem vorhergehenden Anspruch,

wobei der Detektor (7) einen dritten Sensorabschnitt (18) in der Detektorebene aufweist,
wobei der dritte Sensorabschnitt (18) von dem ersten Sensorabschnitt (16) und dem zweiten Sensorabschnitt (17) beabstandet angeordnet ist,

wobei der dritte Sensorabschnitt (18) derart ausgestaltet und angeordnet ist, dass in dem Betrieb des Absorptionssensors (23) der dritte Sensorabschnitt (18) eine dritte Musterintensität des Interferenzmusters (12) der Abfragestrahlung (5) erfasst und ein drittes Messsignal erzeugt,

wobei die Phase der durch das periodische Modulieren der Anregungsstrahlung (2) bewirkten periodischen Modulation der Abfragestrahlung (5) auf dem ersten Sensorabschnitt (16) um einen von null Grad oder 360 Grad verschiedenen Wert gegenüber der Phase der durch das periodische Modulieren der Anregungsstrahlung (2) bewirkten periodischen Modulation der Abfragestrahlung (5) auf dem dritten Sensorabschnitt (18) verschoben ist,

wobei die Verarbeitungseinrichtung (9, 11) derart mit dem Detektor (7) verbunden ist, dass die Verarbeitungseinrichtung (9, 11) in dem Betrieb des Absorptionssensors das dritte Messsignal von dem Detektor (7) erhält,

wobei die Verarbeitungseinrichtung (9, 11) derart ausgestaltet ist, dass sie in dem Betrieb des Absorptionssensors (23) die Differenz zwischen dem ersten Messsignal und einer Summe aus dem zweiten und dem dritten Messsignal als das Detektorsignal bildet, so dass das Detektorsignal ein differenzielles Signal ist, und

wobei das Filter derart ausgestaltet ist, dass in dem Betrieb des Absorptionssensors (23) das Filter zumindest das erste Messsignal, das zweite Messsignal und das dritte Messsignal oder das Detektorsignal nach der Modulationsfrequenz filtert, so dass das Ausgabesignal mit der Modulationsfrequenz modulierte Signalanteile des ersten Messsignals, des zweiten Messsignals und des dritten Messsignals enthält.

14. Absorptionssensor (23) nach Anspruch 12 oder 13, wobei der erste und der zweite Sensorabschnitt (16, 17) und vorzugsweise der dritte Sensorabschnitt (18) derart angeordnet sind, dass eine die drei Sensorabschnitte (16, 17, 18) verbindende Gerade im Wesentlichen senkrecht zu einer von dem Anregungsstrahlengang (2) und dem Abfragestrahlengang (5) aufgespannten Ebene (15) ist.

**Claims**

1. A method for photothermally determining an absorption of an electromagnetic excitation radiation in a sample (3), the method comprising the steps of

A) generating the excitation radiation (2), wherein the excitation radiation (2) comprises an excitation intensity varying across an excitation beam cross-section of the excitation radiation and an excitation frequency, wherein the excitation frequency is equal to an absorption frequency of the sample,

B) periodically modulating the excitation radiation with a modulation frequency,

C) illuminating the sample with the periodically modulated excitation radiation,

D) generating an electromagnetic sampling radiation comprising a sampling beam cross-section and a sampling frequency, wherein the sampling frequency is different from the excitation frequency,

E) illuminating the sample with the sampling radiation,

> so that an excitation beam path of the excitation radiation and a sampling beam path of the sampling radiation intersect at a non-zero degree angle at an intersection point in the sample and
> so that the sampling beam cross-section is distributed over regions of the excitation beam cross-section, which regions comprise excitation intensities being different from each other,

F) detecting a first pattern intensity of an interference pattern of the sampling radiation in the sampling beam path behind the sample at a first location in a detector plane as a first measurement signal; and

G) generating a detector signal from the first measurement signal; and

H) filtering the first measurement signal or the detector signal according to the modulation frequency so that an output signal is generated, the output signal containing signal components of the first measurement signal modulated with the modulation frequency, **characterized in that**

the method further comprises the step of

I) detecting a second pattern intensity of the interference pattern of the sampling radiation at a second location in the detector plane as a second measurement signal,

> such that the phase of a periodic modulation of the first pattern intensity of the sampling radiation caused by the periodic modulation of the excitation radiation at the first location is shifted by a value other than zero degrees or 360 degrees with respect to the phase of the periodic modulation of the second pattern intensity of the sampling radiation caused by the periodic modulation of the excitation radiation at the second location, and

the step G) comprises the step of

> a) forming a difference between the first measurement signal and the second measurement signal such that the detector signal is a differential signal,

wherein step H) comprises a filtering of at least one of the first and second measurement signals or the detector signal such that the output signal includes signal portions of the first measurement signal and the second measurement signal modulated at the modulation frequency.

2. The method according to the preceding claim, wherein at the intersection of the excitation beam path of the excitation radiation and the sampling beam path of the sampling radiation in the sample, the sampling beam radius of the sampling beam cross-section is larger, preferably at least three times larger and most preferably at least ten times larger, than the excitation beam radius of the excitation beam cross-section.

3. The method according to anyone of the preceding claims, wherein the excitation beam path and the sampling beam path are arranged at the intersection such that the beam axis of the excitation beam path and the beam axis of the sampling beam path are spaced apart from each other by a distance smaller than a sampling beam radius of the sampling beam path at the intersection, preferably amounts to one third or less of the sampling beam radius of the sampling beam path at the intersection, and more preferably is zero.

4. The method according to anyone of the preceding claims, wherein the phase of the periodic modulation of the first pattern intensity of the sampling radiation caused by the periodic modulation of the excitation radiation at the first location is shifted by a value in a range from 160 degrees to 200 degrees, preferably in a range from 170 degrees to 190 degrees, and most preferably by 180 degrees, relative to the phase of the periodic modulation of the second pattern intensity of the sampling radiation caused by the periodic modulation of the excitation radiation at the second location.

5. The method according to anyone of the preceding claims, the method additionally comprising the step of

> J) detecting a third pattern intensity of the interference pattern of the sampling radiation at a third location in the detector plane as a third measurement signal,

such that the phase of the periodic modulation of the first pattern intensity of the sampling radiation at the first location is shifted by a value other than zero degrees or 360 degrees with respect to the phase of the periodic modulation of the third pattern intensity of the sampling radiation at the third location caused by the periodic modulation of the excitation radiation,
the step G) additionally comprising the step of
b) forming a sum of the second and the third measurement signals and wherein forming the difference in step a) comprises
forming a difference between the first measurement signal and the sum of the second and third measurement signals; and
wherein step H) comprises a filtering of at least one of the first measurement signal, the second measurement signal, and the third measurement signal or the detector signal.

6. The method according to anyone of the preceding claims, wherein step G) additionally comprises the steps of

c) before step a), amplifying the first measurement signal by a first amplifying factor, and
d) before step a), amplifying either the second measurement signal by a second amplifying factor or the sum of the second and third measurement signals by the second amplifying factor, and
e) adjusting or controlling a ratio of the first amplifying factor and the second amplifying factor such that a time average of the detector signal is substantially zero.

7. The method according to anyone of the preceding claims, wherein the method additionally comprises the step of
K) forming a total power signal as a sum of at least the first and the second measurement signals, preferably of the first, the second and the third measurement signals.

8. The method according to anyone of the preceding claims insofar as dependent on claim 3, wherein the method additionally comprises the steps of

L) forming an error signal as the difference between the second and third measurement signals; and
M) adjusting at least one of the excitation beam path and the sampling beam path such that the error signal is substantially equal to zero.

9. The method according to the preceding claim, wherein the adjusting in step M) is automated and controlled, the error signal being the controlled variable.

10. The method according to anyone of the preceding claims, wherein a distance of the detector plane from the intersection of the excitation beam path of the excitation radiation and the sampling beam path of the sampling radiation in the sample is 30 cm or less, preferably 10 cm or less, and most preferably 5 cm or less.

11. The method according to anyone of the preceding claims, wherein in the sampling beam path between the intersection of the excitation beam path and the sampling beam path and the detection of the pattern intensities in steps F) and I) and preferably in step J) no beam deflection takes place.

12. A photothermal absorption sensor (23) for determining an absorption of an electromagnetic excitation radiation in a sample (3), comprising

a radiation source (1) configured such that the radiation source (1) in an operation of the absorption sensor (23) generates and radiates the excitation radiation (2), which excitation radiation (2) comprises an excitation intensity varying across an excitation beam cross-section of the excitation radiation (2) and an excitation frequency,
a modulation device (10), which is configured and arranged in such a way that the modulation device (10) periodically modulates the excitation radiation (2) with a modulation frequency in the operation of the absorption sensor (23),
a radiation source (4) which is configured in such a way that the radiation source (4), in the operation of the absorption sensor (23), generates and radiates an electromagnetic sampling radiation (5), which electromagnetic sampling radiation (5) comprises a sampling beam cross-section and a sampling frequency, the sampling frequency being different from the excitation frequency,
a detector (7) configured and arranged such that, in the operation of the absorption sensor (23), the detector (7) detects a first pattern intensity of an interference pattern (12) of the sampling radiation (5) in a sampling beam path (25) of the sampling radiation (5) behind the sample (3) and generates a first measurement signal, and
a processing means (9, 11) connected to the detector (7) such that the processing device (11) receives the first measurement signal from the detector (7) in the operation of the absorption sensor (23),
wherein an excitation beam path (24) of the excitation radiation (2) emitted by the radiation source (1) and the sampling beam path (25) are configured and arranged such that in the operation of the absorption sensor (23) the sample (3) is illuminated with the periodically modulated excitation radiation (2) and with the sampling radiation (5) in such a manner that the excitation beam path (24) and the sampling beam path (25) intersect at a non-zero degree angle (6) at an intersection point in the sample (3) and that the sampling beam cross-section is distributed aross areas of the excitation beam cross-section, which sections comprising intensities being different from each other,

wherein the processing means (9, 11) comprises a filter, the filter being configured such that in the operation of the absorption sensor (23) the filter filters the first measurement signal or a detector signal formed from the first measurement signal according to the modulation frequency so that an output signal is generated, the output signal containing signal components of the first measurement signal modulated by the modulation frequency,

**characterized in that**

the detector (7) has, in a detector plane, a first sensor section (16) and a second sensor section (17) spaced from the first sensor section (16), the first and second sensor sections (16, 17) being configured and arranged in such a way that in the operation of the absorption sensor (23) the first sensor section (16) detects the first pattern intensity and generates the first measurement signal and the second sensor section (17) detects a second pattern intensity of the interference pattern (12) of the sampling radiation (5) and generates a second measurement signal,

wherein the phase of a periodic modulation of the sampling radiation (5) caused by the periodic modulation of the excitation radiation (2) on the first sensor section (16) is shifted by a value different from zero degrees or 360 degrees with respect to the phase of the periodic modulation of the sampling radiation (5) caused by the periodic modulation of the excitation radiation (2) on the second sensor section (17), wherein the processing means (9, 11) is connected to the detector such that the processing means (9, 11) receives the second measurement signal from the detector (7) in the operation of the absorption sensor (23),

wherein the processing means (9, 11) is configured to form a differential detector signal as a difference between the first measurement signal and the second measurement signal in the operation of the absorption sensor (23), and

the filter is configured such that, in the operation of the absorption sensor (23), the filter filters at least the first measurement signal and the second measurement signal or the detector signal according to the modulation frequency so that the output signal contains signal components of the first measurement signal and the second measurement signal being modulated by the modulation frequency.

13. The absorption sensor (23) according to the preceding claim,

wherein the detector (7) has a third sensor section (18) in the detector plane,

wherein the third sensor section (18) is arranged spaced apart from the first sensor section (16) and the second sensor section (17),

wherein the third sensor section (18) is configured and arranged such that, in the operation of the absorption sensor (23), the third sensor section (18) detects a third pattern intensity of the interference pattern (12) of the sampling radiation (5) and generates a third measurement signal,

wherein the phase of the periodic modulation of the sampling radiation (5) caused by the periodic modulation of the excitation radiation (2) on the first sensor section (16) is shifted by a value different from zero degrees or 360 degrees with respect to the phase of the periodic modulation of the sampling radiation (5) caused by the periodic modulation of the excitation radiation (2) on the third sensor section (18), wherein the processing means (9, 11) is connected to the detector (7) such that the processing means (9, 11) receives the third measurement signal from the detector (7) in the operation of the absorption sensor,

wherein the processing means (9, 11) is configured to form the difference between the first measurement signal and a sum of the second and third measurement signal as the detector signal in the operation of the absorption sensor (23), so that the detector signal is a differential signal, and

wherein the filter is configured such that in the operation of the absorption sensor (23), the filter filters at least the first measurement signal, the second measurement signal, and the third measurement signal or the detector signal according to the modulation frequency such that the output signal includes signal components of the first measurement signal, the second measurement signal, and the third measurement signal being modulated at the modulation frequency.

14. The absorption sensor (23) according to claim 12 or 13, wherein the first and the second sensor section (16, 17) and preferably the third sensor section (18) are arranged such that a straight line connecting the three sensor sections (16, 17, 18) is substantially perpendicular to a plane (15) spanned by the excitation beam path (2) and the sampling beam path (5).

## Revendications

1. Procédé de détermination photothermique d'une absorption d'un rayonnement d'excitation électromagnétique dans un échantillon (3), comprenant les étapes de

A) générer le rayonnement d'excitation (2) avec une intensité d'excitation variant sur une section transversale du rayon d'excitation du rayonnement d'excitation (2) et avec une fréquence d'excitation, la fréquence d'excitation étant égale à la fréquence d'absorption de l'échantillon,
B) moduler le rayonnement d'excitation périodiquement avec une fréquence de modulation,
C) éclairer l'échantillon avec le rayonnement d'excitation périodiquement modulé,
D) générer un rayonnement d'interrogation électromagnétique ayant une section transversale de rayon d'interrogation et une fréquence d'interrogation, la fréquence d'interrogation étant différente de la fréquence d'excitation,
E) éclairer l'échantillon avec le rayonnement d'interrogation,

si bien qu'une trajectoire de rayonnement d'excitation du rayonnement d'excitation et une trajectoire de rayonnement d'interrogation du rayonnement d'interrogation se coupent à un point d'intersection à l'intérieur de l'échantillon sous un angle différent de zéro degré et
si bien que la section transversale du rayon d'interrogation s'étale sur des zones de la section transversale du rayonnement d'excitation ayant des intensités d'excitation différentes les unes des autres,

F) saisir une première intensité de motif d'un motif d'interférence du rayonnement d'interrogation sur la trajectoire de rayonnement d'interrogation derrière l'échantillon à un premier endroit dans un plan de détecteur, comme un premier signal de mesure et
G) former un signal de détecteur à partir du premier signal de mesure et
H) filtrer le premier signal de mesure ou le signal de détecteur selon la fréquence de modulation, si bien qu'un signal de sortie soit généré, le signal de sortie comprenant des parties de signal du premier signal de mesure modulées avec la fréquence de modulation,
**caractérisé en ce que**
le procédé comprend en outre les étapes de
I) saisir une deuxième intensité de motif du motif d'interférence du rayonnement d'interrogation à un deuxième endroit dans le plan de détecteur, comme un deuxième signal de mesure,

si bien que la phase d'une modulation périodique de la première intensité de motif du rayonnement d'interrogation causée par la modulation périodique du rayonnement d'excitation, au premier endroit soit décalée d'une valeur différente de zéro degré ou de 360 degrés par rapport à la phase de la modulation périodique de la deuxième intensité de motif du rayonnement d'interrogation causée par la modulation périodique du rayonnement d'excitation, au deuxième endroit, et
l'étape G) comprend l'étape de

a) former une différence entre le premier signal de mesure et le deuxième signal de mesure de façon que le signal de détecteur soit un signal différentiel,

l'étape H) comprenant un filtrage au moins du premier et du deuxième signal de mesure ou du signal de détecteur de façon que le signal de sortie comprenne des parties de signal du premier signal de mesure et du deuxième signal de mesure modulées avec la fréquence de modulation.

2. Procédé selon la revendication précédente, au point d'intersection de la trajectoire de rayonnement d'excitation du rayonnement d'excitation et de la trajectoire de rayonnement d'interrogation du rayonnement d'interrogation dans l'échantillon, le rayon de faisceau d'interrogation de la section transversale du faisceau d'interrogation étant plus important, de préférence au moins trois fois plus important et de façon préférée au moins dix fois plus important, que le rayon de faisceau d'excitation de la section transversale du faisceau d'excitation.

3. Procédé selon l'une des revendications précédentes, la trajectoire de rayonnement d'excitation et la trajectoire de rayonnement d'interrogation étant disposées au point d'intersection de façon que l'axe de faisceau de la trajectoire de faisceau d'excitation et l'axe de faisceau de la trajectoire de faisceau d'interrogation sont espacés l'un de l'autre d'une distance qui est inférieure à un rayon de faisceau d'interrogation de la trajectoire de faisceau d'interrogation au point d'intersection, de préférence un tiers ou moins du rayon de faisceau d'interrogation de la trajectoire de rayonnement d' interrogation au point d'intersection ou de manière particulièrement préférée égale à zéro.

4. Procédé selon l'une des revendications précédentes, la phase de la modulation périodique de la première intensité de motif du rayonnement d'interrogation au premier endroit, causée par la modulation périodique du rayonnement d'excitation, étant décalée d'une valeur dans la plage de 160 degrés à 200 degrés, de préférence dans une plage de 170 degrés à 190 degrés et de façon particulièrement préférée de 180 degrés par rapport à la phase de la modulation périodique de la deuxième intensité de motif du rayonnement d'interrogation au deuxième endroit, causée par la modulation périodique du rayonnement d'excitation.

5. Procédé selon l'une des revendications précédentes, le procédé comprenant en outre l'étape de

J) saisir une troisième intensité de motif du motif d'interférence du rayonnement d'interrogation à un troisième endroit dans le plan de détecteur comme troisième signal de mesure,
si bien que la phase de la modulation périodique de la première intensité de motif du rayonnement d'interrogation au premier endroit soit décalée d'une valeur autre que zéro degré ou 360 degrés par rapport à la phase de la modulation périodique de la troisième intensité de motif du rayonnement d'interrogation au troisième endroit, causée par la modulation périodique du rayonnement d'excitation,
l'étape G) comprenant en outre l'étape de
b) obtenir une somme des deuxième et troisième signaux de mesure et l'obtention de la différence à l'étape a) comprenant
obtenir une différence entre le premier signal de mesure et la somme des deuxième et troisième signaux de mesure et
l'étape H) comprenant un filtrage au moins du premier, du deuxième et du troisième signal de mesure ou du signal de détecteur.

6. Procédé selon l'une des revendications précédentes, l'étape G) comprenant en outre les étapes de

c) avant l'étape a), amplifier le premier signal de mesure avec un premier facteur d'amplification et
d) avant l'étape a), amplifier soit le deuxième signal de mesure avec un deuxième facteur d'amplification soit la somme des deuxième et troisième signaux de mesure avec le deuxième facteur d'amplification et

e) ajuster ou régler un rapport entre le premier facteur d'amplification et le deuxième facteur d'amplification de façon qu'une moyenne dans le temps du signal de détecteur soit sensiblement égale à zéro.

7. Procédé selon l'une des revendications précédentes, le procédé comprenant en outre l'étape de
K) former un signal de puissance totale comme somme d'au moins les premier et deuxième signaux de mesure, de préférence des premier, deuxième et troisième signaux de mesure.

8. Procédé selon l'une des revendications précédentes dans la mesure où elles dépendent de la revendication 3, le procédé comprenant en outre les étapes de

L) former un signal d'erreur comme différence entre le deuxième et le troisième signal de mesure et
M) ajuster au moins la trajectoire de rayonnement d'excitation ou la trajectoire de rayonnement d'interrogation si bien que le signal d'erreur soit sensiblement égal à zéro.

9. Procédé selon l'une des revendications précédentes, l'ajustement à l'étape M) se faisant automatiquement et de façon réglée, le signal d'erreur étant la grandeur de réglage.

10. Procédé selon l'une des revendications précédentes, une distance entre le plan de détecteur et le point d'intersection de la trajectoire de rayonnement d'excitation du rayonnement d'excitation et de la trajectoire de rayonnement d'interrogation du rayonnement d'interrogation dans l'échantillon étant de 30 cm ou moins, de préférence de 10 cm ou moins et de façon particulièrement préférée de 5 cm ou moins.

11. Procédé selon l'une des revendications précédentes, aux étapes F) et I) et de préférence à l'étape J), aucune déviation de faisceau étant effectuée sur la trajectoire de rayonnement d'interrogation entre la coupe de la trajectoire de rayonnement d'excitation avec la trajectoire de rayonnement d'interrogation et la saisie des intensités de motif.

12. Capteur d'absorption photothermique (23) pour déterminer une absorption d'un rayonnement d'excitation électromagnétique dans un échantillon (3), comprenant

une source de rayonnement (1) qui est configurée de façon que la source de rayonnement (1) génère et émette, lors d'un fonctionnement du capteur d'absorption (23), le rayonnement d'excitation (2) avec une intensité d'excitation qui varie sur la section transversale du rayon d'excitation du rayonnement d'excitation (2) et avec une fréquence d'excitation,

un dispositif de modulation (10) qui est configuré et disposé de façon que, lors du fonctionnement du capteur d'absorption (23), le dispositif de modulation (10) module périodiquement le rayonnement d'excitation (2) avec une fréquence de modulation,

une source de rayonnement (4) qui est configurée de façon que, lors du fonctionnement du capteur d'absorption (23), la source de rayonnement (4) génère et émette un rayonnement d'interrogation électromagnétique (5) avec une section transversale de rayon d'interrogation et avec une fréquence d'interrogation, la fréquence d'interrogation étant différente de la fréquence d'excitation,

un détecteur (7) qui est configuré et disposé de façon que, lors du fonctionnement du capteur d'absorption (23), le détecteur (7) saisisse une première intensité de motif d'un motif d'interférence (12) du rayonnement d'interrogation (5) sur une trajectoire de rayonnement d'interrogation (25) du rayonnement d'interrogation (5) derrière l'échantillon (3) et génère un premier signal de mesure, et

un dispositif de traitement (9, 11) qui est relié au détecteur (7) de façon telle que, lors du fonctionnement du capteur d'absorption (23), le dispositif de traitement (11) reçoive le premier signal de mesure du détecteur (7),

une trajectoire de rayonnement d'excitation (24) du rayonnement d'excitation (2) émis par la source de rayonnement (1) et la trajectoire de rayonnement d'interrogation (25) étant configurées et disposées de façon que, lors du fonctionnement du capteur d'absorption (23), l'échantillon (3) soit éclairé par le rayonnement d'excitation (2) périodiquement modulé et par le rayonnement d'interrogation (5) de façon telle que la trajectoire de rayonnement d'excitation (24) et la trajectoire de rayonnement d'interrogation (25) se coupent à un point d'intersection dans l'échantillon (3) sous un angle (6) différent de zéro degré et que la section transversale du rayon d'interrogation s'étende sur des zones de la section transversale du rayon d'excitation de ayant des intensités différentes les unes des autres,

le dispositif de traitement (9, 11) comprenant un filtre, le filtre étant configuré de façon que, lors du fonctionnement du capteur d'absorption (23), le filtre filtre le premier signal de mesure, ou un signal de détecteur formé à partir du premier signal de mesure, selon la fréquence de modulation, si bien qu'un signal de sortie soit généré, le signal de sortie comprenant des parties de signal du premier signal de mesure, modulées avec la fréquence de modulation,

**caractérisé en ce que**

le détecteur (7) comprend, dans un plan détecteur, une première zone de capteur (16) et une deuxième zone de capteur (17) espacée de la première zone de capteur (16), la première et la deuxième zone de capteur (16, 17) étant configurées et disposées de façon que, lors du fonctionnement du capteur d'absorption (23), la première zone de capteur (16) saisisse la première intensité de motif et génère le premier signal de mesure et que la deuxième zone de capteur (17) saisisse une deuxième intensité de motif du motif d'interférence (12) du rayonnement d'interrogation (5) et génère un deuxième signal de mesure,

la phase d'une modulation périodique du rayonnement d'interrogation (5) causée par la modulation périodique du rayonnement d'excitation (2), dans la première zone de capteur (16), étant décalée par rapport à la phase de la modulation périodique du rayonnement d'interrogation (5) causée par la modulation périodique du rayonnement d'excitation (2), dans la deuxième zone de capteur (17), d'une valeur différente de zéro degré ou de 360 degrés,

le dispositif de traitement (9, 11) étant relié au détecteur de façon que, lors du fonctionnement du capteur d'absorption (23), le dispositif de traitement (9, 11) reçoive le deuxième signal de mesure du détecteur (7),

le dispositif de traitement (9, 11) étant configuré de façon que, lors du fonctionnement du capteur d'absorption, le dispositif forme un signal de détecteur différentiel comme la différence entre le premier signal de mesure et le deuxième signal de mesure, et

le filtre étant configuré de façon que, lors du fonctionnement du capteur d'absorption (23), le filtre filtre au moins le premier signal de mesure et le deuxième signal de mesure ou le signal de détecteur, selon la fréquence de modulation, si bien que le signal de sortie comprenne des parties de signal du premier signal de mesure et du deuxième signal de mesure, modulées avec la fréquence de modulation.

13. Capteur d'absorption photothermique (23) selon la revendication précédente,

le détecteur (7) comprenant une troisième zone de capteur (18) dans le plan de détecteur, la troisième zone de capteur (18) étant disposée espacée de la première zone de capteur (16) et de la deuxième zone de capteur (17),

la troisième zone de capteur (18) étant configurée et disposée de façon que, lors du fonctionnement du capteur d'absorption (23), la troisième zone de capteur (18) saisisse une troisième intensité de motif du motif d'interférence (12) du rayonnement d'interrogation (5) et génère un troisième signal de mesure,

la phase de la modulation périodique du rayonnement d'interrogation (5) causée par la modulation périodique du rayonnement d'excitation (2), dans la première zone de capteur (16), étant décalée par rapport à la phase de la modulation périodique du rayonnement d'interrogation (5) causée par la modulation périodique du rayonnement d'excitation (2), dans la troisième zone de capteur (18), d'une valeur différente de zéro degré ou de 360 degrés,

le dispositif de traitement (9, 11) étant relié au détecteur (7) de façon que, lors du fonctionnement du capteur d' absorption, le dispositif de traitement (9, 11) reçoive le troisième signal de mesure du détecteur (7),

le dispositif de traitement (9, 11) étant configuré de façon que, lors du fonctionnement du capteur d'absorption (23), le dispositif forme la différence entre le premier signal de mesure et une somme des deuxième et troisième signaux de mesure comme le signal de détecteur, si bien que le signal de détecteur soit un signal différentiel, et

le filtre étant configuré de façon que, lors du fonctionnement du capteur d'absorption (23), le filtre filtre au moins le premier signal de mesure, le deuxième signal de mesure et le troisième signal de mesure ou le signal de détecteur selon la fréquence de modulation, si bien que le signal de sortie comprenne des parties de signal du premier signal de mesure, du deuxième signal de mesure et du troisième signal de mesure, modulées avec la fréquence de modulation.

14. Capteur d'absorption photothermique (23) selon la revendication 12 ou 13, la première et la deuxième zone de capteur (16, 17) et de préférence la troisième zone de capteur (18) étant disposées de façon qu'une droite reliant les trois zones de capteur (16, 17, 18) soit sensiblement perpendiculaire à un plan (15) défini par la trajectoire de rayonnement d'excitation (2) et la trajectoire de rayonnement d'interrogation (5).

Fig. 1

Fig. 2

Fig. 3

**IN DER BESCHREIBUNG AUFGEFÜHRTE DOKUMENTE**

**In der Beschreibung aufgeführte Patentdokumente**

- DE 102018115420 A1